# EUROPÄISCHE PATENTSCHRIFT

(11) **EP 0 866 594 B1**
(45) Veröffentlichungstag und Bekanntmachung des Hinweises auf die Patenterteilung: **19.06.2013**
(21) Anmeldenummer: 98104078.5
(22) Anmeldetag: 06.03.1998
(51) Int. Cl.: H04M 3/50, H04M 3/42, H04M 3/48

(54) **Kommunikationssystem, insbesondere programmgesteuertes Nebenstellenkommunikationssystem, bei dem eine Terminfunktion realisiert ist**
Communication system, especially program controlled private communication system in which a timetable function is realised
Système de communication, en particulier système de communication privé à commande par programme dans lequel une fonction de calendrier est réalisée

(30) Priorität: 21.03.1997 DE 19711908
(43) Veröffentlichungstag der Anmeldung: 23.09.1998
(73) Patentinhaber: Siemens Enterprise Communications GmbH & Co. KG, 81379 München (DE)
(72) Erfinder: Lindemann, Werner, Dr., 45473 Mühlheim (DE); Gerding, Silvia, 48163 Münster (DE)
(74) Vertreter: Fritzsche, Thomas

(56) Entgegenhaltungen:
- EP-A- 0 621 715
- WO-A-97/34406
- US-A- 4 783 800
- US-A- 4 969 136
- US-A- 5 416 473

## Beschreibung

Kommunikationssysteme dienen zur Verbindung von Endgeräten untereinander und zur Verbindung dieser Endgeräte mit an anderen Kommunikationsnetzen, z. B. öffentlichen Netzen angeschlossenen Endgeräten. Unabhängig vom unterschiedlichen Komplexitätsgrad solcher Kommunikationssysteme besteht ein Kommunikationssystem im Prinzip aus einer Vielzahl vermittlungstechnischer Funktionseinheiten und einer programmierbaren Datenverarbeitungseinrichtung mit einem Systemspeicher und wenigstens einem Systemprozessor. Dieser steuert die Funktionseinheiten und überwacht alle vermittlungstechnischen Abläufe. Zu diesem Zweck wird die Datenverarbeitungseinrichtung mit Informationen über den Betriebszustand der Funktionseinheiten und über Zustandsänderungen, insbesondere auch über Eingaben an den angeschlossenen Endgeräten informiert. Es kann deshalb bei Bedarf umgehend entsprechende Steueranweisungen und Meldungen erstellen und weitergeben.

In US 5,416,473 ist eine elektronische Informationsverarbeitungsvorrichtung beschrieben, die fähig ist zum Mitteilen einer Sprachnachricht an ein Paging-Endgerät. Die Vorrichtung verwendet eine Eingabeeinrichtung zur Eingabe der Sprachnachricht, wählt einen Nachrichtenübermittlungsteilnehmer und ihre entsprechende selektive Rufadresskennung und plant eine Mitteilung der Sprachnachricht zum Paging-Endgerät zur Übertragung zu mindestens einem selektiven Rufempfänger, der dem ausgewählten Nachrichtenübermittlungsteilnehmer entspricht.

In zeitgemäßen programmgesteuerten Kommunikationssystemen, insbesondere in Fernsprechnebenstellensystemen werden unterschiedliche Leistungsmerkmale und Dienste realisiert. Diese erhöhen in vielfacher Hinsicht die Nutzungsmöglichkeiten und steigern den Bedienerkomfort. Sie bieten über die Grundfunktion der Vermittlung hinausgehende Möglichkeiten. Es sind dafür neben dem einen Verbindungsaufbau bzw. einen Verbindungsabbau zwischen einem Kommunikationsendgerät und dem Kommunikationssystem zuzuordnenden Prozedurabläufen weitere Prozedurabläufe notwendig. Diese werden in der Regel mit Hilfe einer bestimmten Signalisierungsprozedur gesteuert. Solche Leistungsmerkmale bzw. Dienste können durch die Einwahl einer bestimmten Kennzahl bzw. Kennzahlenkombination oder durch die Betätigung einer entsprechend programmierten Funktionstaste aktiviert werden. Die Möglichkeit einer solchen Inanspruchnahme ist auch von der Art und dem Funktionsumfang der verwendeten Endgeräte abhängig. Mit bekannten unterschiedlichen Leistungsmerkmalen kann einerseits im Rahmen des Kommunikationsdienstes "Sprache" der Bedienerkomfort gesteigert werden und es werden andererseits auch über die Grundfunktion der Vermittlung hinausgehende Möglichkeiten geboten. Eine solche mögliche zusätzliche Funktionalität ist beispielsweise die Inanspruchnahme einer Terminfunktion mit Hilfe einer zusätzlich implementierten entsprechenden Programmsteuerung innerhalb einer Termineinrichtung. Im Rahmen einer solchen Möglichkeit kann der Teilnehmer vom Endgerät aus eine Uhrzeit mit oder ohne Datumsangabe als Termin eingeben. Der eingegebene Terminzeitpunkt wird mit der zur Verfügung stehenden aktuellen Zeit und ggf. Datumsinformation verglichen. Bei Erreichen des jeweiligen Termins wird beispielsweise durch die Systemsteuerung ein entsprechender Alarm als "Terminruf" bewirkt. Dieser Terminruf wird vom angesprochenen Teilnehmer, z. B. durch Abheben seines Handapparates quittiert und beendet. Dieser Terminruf ist dann als solcher zum Beispiel durch den Worthinweis "Termin" auf der Displayanzeige für den Teilnehmer zu erkennen. Es ist auch denkbar die Art des Termins durch einen kurzen Hinweistext auf dem Display anzuzeigen. Dieser betreffende Hinweistext muß dann vorher durch den Teilnehmer über eine alphanumerische Tastatur eingegeben werden. Abgesehen davon, daß für eine derartige Anzeige das Fernsprechendgerät ein Display aufweisen muß, ist eine solche Texteingabe zeitaufwendig. Es besteht deshalb im allgemeinen eine geringe Bereitschaft der Teilnehmer diese Möglichkeit zu nutzen. In US 4,969,136 ist ein solches Kommunikationsnetz beschrieben, das neben einer Mehrzahl von Sendeempfangseinheiten, von denen jede eine Sichtanzeige aufweist, einen Steuerungscomputer und Verbindungsmittel zwischen dem Computer und den Sendeempfangseinheiten umfasst. Die Sendeempfangseinheiten können zur Telefonkommunikation verwendet werden und vom Steuerungscomputer empfangene Information empfangen und in Textform darstellen. Der Computer kann hierbei Information betreffend die Zeiten von Terminen für Benutzer der besagten Sendeempfangseinheiten speichern und abrufen.

Es ist die Aufgabe der Erfindung im Zusammenhang mit einer möglichen Terminfunktion die Betriebsweise zu verbessern.

Diese Aufgabe wird ausgehend von den im Oberbegriff des Patentanspruchs 1 angegebenen Merkmalen durch dessen kennzeichnenden Merkmale gelöst. Das wesentliche der Erfindung besteht darin, daß aufgrund der mit einer bestimmten Prozedur vorgenommenen Eingabe einer Termininformation dem betreffenden Teilnehmer individuell für diesen Termin ein Abschnitt einer Sprachspeichereinrichtung zugewiesen wird. Dies erfolgt im Sinne eines Sprach-Postfaches. In dieses automatisch durch eine entsprechende Adresseninformation bzw. Postfachnummer definierten Sprach-Postfach kann der Teilnehmer einen den jeweiligen Termin charakterisierenden eingesprochenen Text einspeichern. Mit Erreichen des gesetzten Termins wird durch ein Kommunikationssystem eine Verbindung zwischen dem der Termininformation zugeordneten Endgerät und der Sprachspeichereinrichtung hergestellt, wobei durch das Kommunikationssystem die Wiedergabe der eingesprochenen und mit der Adressinformation verknüpften Textinformation ausgelöst wird. Wird bei der vorgenommenen Überwachung die Fälligkeit des Termins festgestellt, dann wird dem Teilnehmer dieser gesprochene Text nach Quittieren des entsprechenden Terminrufes über das entsprechende Ausgabemittel automatisch wiedergegeben. Dieses Mittel kann beispielsweise die Hörkapsel des abgehobenen Telefonapparates oder ein selbsttätig eingeschalteter Lautsprecher sein. Es wird also über eine Ansageeinrichtung die Identifikation mehrerer Termine, die auch auf unterschiedliche Tage verteilt sein können, für den gleichen Teilnehmer ermöglicht. Diese benutzerfreundliche Eingabe der einen Termin jeweils betreffenden gesprochenen Informationen lassen eine hohe Akzeptanz für diese Möglichkeit erwarten. Durch die dynamische Zuordnung des zur Verfügung gestellten Sprach-Postfaches wird jeweils ausschließlich der Text übermittelt, der den fälligen Termin betrifft. Für diese in einfacherweise vorzunehmende sprachunterstützte Terminfunktion sind auch Endgeräte einzusetzen, die weder eine alphanumerische Tastatur noch ein Display aufweisen. Durch die Verknüpfung eines Termins mit einer eingesprochenen Textinformation kann ein Teilnehmer im Bedarfsfall auch eine etwas ausführlichere terminorientierte Information für sich vorsehen.

Gemäß einer Weiterbildung der Erfindung kann die Sprachspeichereinrichtung in unterschiedlicher Weise realisiert sein. Sie kann beispielsweise eine Teileinheit des Systemspeichers bilden oder eine entsprechende Teileinheit eines an das Kommunikationssystem extern angeschlossenen Sprachspeichersystems darstellen. Die notwendigen Steuervorgänge können zumindest teilweise durch die Systemsteuerung ermöglicht werden oder im wesentlichen im Sprachspeichersystem selbst über entsprechende Steuerprogramme initiiert werden. Bei dieser Ausgestaltung werden also die abgespeicherten Termine lokal in dem angeschlossenen Sprachspeichersystem (Voice Mail) überwacht.

Es kann bei einer anderen Ausgestaltung auch vorgesehen sein, daß sämtliche im Zusammenhang mit der Realisierung der Terminfunktion notwendigen Abspeicherungen und die für die Abwicklung der erforderlichen Steuerabläufe notwendigen Programmodule, auf die eine Steuerung zugreift, einschließlich der Sprachspeichereinrichtung im angeschlossenen Endgerät selbst verwirklicht sind. Dies erfolgt dann sinnvollerweise als Teilfunktion einer eine sogenannte Anrufbeantworterfunktion ermöglichenden Ausstattung.

Weitere vorteilhafte Ausgestaltungen der Erfindung sind den restlichen Unteransprüchen zu entnehmen.

Die Erfindung wird im folgenden anhand eines figürlich dargestellten Ausführungsbeispiels erläutert. Es zeigt als Blockschaltbild die Struktur eines programmgesteuerten Nebenstellenkommunikationssystem in schematischer Darstellung. Es sind lediglich die zum Verständnis der Erfindung notwendigen Komponenten gezeigt.

Zentraler Bestandteil des Kommunikationssystems KS, das ein sogenanntes Nebenstellen-Kommunikationssystem darstellt, ist ein zentrales Koppelfeld KF, über das Endgeräte, von denen die Fernsprechendgeräte FE1 und FEx schematisch angedeutet sind -miteinander bzw. mit zu einem öffentlichen Kommunikationssystem ÖN führenden Leitungen AL verbindbar sind. Das zentrale Koppelfeld KF steht unter dem Steuereinfluß einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt werden.

Im Kommunikationssystem KS sind Leitungsanschlußeinrichtungen, symbolisiert durch die Leitungsanschlußeinrichtung LT angeordnet. Diese enthalten jeweils Teilnehmeranschlußmodule SLM. Diese Teilnehmeranschlußmodule sind über Teilnehmeranschlußleitungen ASL jeweils mit Endeinrichtungen verbunden. Dies sind beispielsweise die Kommunikationsendgeräte FE1 bis FEx und andere Endeinrichtungen, wie beispielsweise eine Sprachspeicher-Einheit SSE. Es können grundsätzlich unterschiedliche Teilnehmeranschlußmodule vorgesehen sein. Dies sind zum einen Teilnehmeranschlußmodule für den Anschluß analoger Kommunikationsendgeräte und zum anderen Teilnehmeranschlußmodule für den Anschluß unterschiedlich strukturierter digitaler Kommunikationsendgeräte. Ein solches digitales Teilnehmeranschlußmodul ist für den Anschluß einer ganz bestimmten Anzahl von digitalen Kommunikationsendgeräten vorgesehen. Die Nachrichtenübertragung erfolgt hierbei z. B. über Nachrichtenkanäle N und die Signalisierung wird über einen zusätzlichen Signalisierungskanal S übermittelt. Die vom Kommunikationsendgerät, beispielsweise dem Endgerät FE1 übermittelten digitalen Sprachinformationen werden ebenfalls über eine Multiplex-Einrichtung MUX zum Koppelfeld KF weitergeleitet. Vermittlungstechnisch gesteuert werden die Leitungsanschlußeinrichtungen LT von der Systemsteuerung ST. Hierbei ist jede Leitungsanschlußeinrichtung über einen Signalisierungskanal SK mit der Systemsteuerung verbunden. Über diesen Signalisierungskanal SK werden die Informationen mit Hilfe der bekannten HDLC-Übermittlungsprozedur ausgetauscht. Die in der Systemsteuerung gebildeten Taktsignale werden über eine Taktleitung TL an die Leitungsanschlußeinrichtungen LT verteilt. Mit der Einheit TG ist angedeutet, daß durch sie Taktsignale zur Verfügung gestellt werden.

Der Zugriff zu einer Amtsleitung AL über die, ggf. als eine von mehreren, das Kommunikationssystem KS beispielsweise mit dem öffentlichen Netz ÖN verbunden ist, erfolgt über die Schnittstelle LS. Diese Schnittstelle beinhaltet beispielsweise ein ISDN-Teil, der z. B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems dient. Der zentrale Prozessor CPU der Systemsteuerung hat Zugriff zu den in der Speichereinrichtung SPE abgelegten Daten. Sie besteht grundsätzlich aus den Speicherteilen PS und DS. In dem Programmspeicherteil PS ist das Anlagenbetriebsprogramm und die zu ihm bezüglich der Peripherietechnik, der Betriebstechnik, der Sicherheitstechnik und der Vermittlungstechnik gehörende Programme abgespeichert. Dies ist bezüglich der Vermittlungstechnik durch das Modul VT angedeutet.

In dem Speicherteil DS ist als Teileinheit der Datenbasis der Speicherbereich KD angedeutet. In diesem sind die Kundendaten, wie z. B. die den einzelnen Endgeräten FE1 bis FEx zugeteilten Berechtigungen und die Systemkonfiguration abgelegt. In dem Teilbereich SYS sollen die system-bezogenen Daten enthalten sein. Der Speicherteil DS dient u. a. der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmals abgefragt werden. So soll beispielsweise in dem Speicherbereich FD jedem Endgerät bzw. jeder Endeinrichtung ein Speicherabschnitt zugeteilt sein, in dem sämtliche endgerätebezogene Daten abgelegt sind. Es werden darin Informationen abgespeichert, die die in Anspruch zu nehmenden Leistungsmerkmale oder auch die bereits beanspruchten Leistungsmerkmale betreffen. Sie sind also jeweils als dynamische Datenbasis für die einzelnen Endgeräte bzw. Endeinrichtungen anzusehen.

Für jedes der angeschlossenen Endgeräte bzw. für eine angeschlossene sonstige Endeinrichtung ist zur Steuerung ein an das jeweilige Endgerät bzw. die Einrichtung angepaßtes Leitungsprogrammodul vorhanden, das in Zuordnung zu dem Programmspeicher PS durch das Modul DH symbolisiert ist. Beispielhaft ist das Modul DH-FE1 für das Fernsprechendgerät FE1 und das Modul DH-SSE für die angeschlossene Sprachspeichereinrichtung SSE angedeutet. Jedes dieser Module bietet eine systemeinheitliche Schnittstelle zur vermittlungstechnischen Strukturebene, die durch das Vermittlungsprozedurprogrammodul VT repräsentiert ist. Der Informationsaustausch zwischen den Struktur- bzw. Steuerungsebenen erfolgt mittels definierter Meldungen, die beispielsweise über eine Software-Bus-Struktur übertragen werden können. Diese kann als integraler Bestandteil des Betriebssystems BS angesehen werden.

Ein derartiges Kommunikationssystem KS ist grundsätzlich in seiner Struktur bekannt. Insoweit erübrigt sich eine Beschreibung der einzelnen Vorgänge bei einem Verbindungsaufbau sowie dem Verbindungsabbau. Es wird davon ausgegangen, daß für das Kommunikationssystem KS eine sogenannte Termineinrichtung vorgesehen ist. Das bedeutet, daß ein Teilnehmer, beispielsweise der Benutzer des Endgerätes FE1 vermittels der Tasten des Tastaturblockes TA eine Uhrzeit, die durch eine Datumsangabe ergänzt werden kann, eingeben kann. Bei Erreichen dieser eingegebenen Uhrzeit wird dann jeder Teilnehmer automatisch durch einen "Terminruf" an den eingegebenen Termin erinnert. Diese Erinnerung erfolgt nun erfindungsgemäß in der Weise, daß dem betreffenden Teilnehmer in natürlicher Sprache ein Text, den er über sein Telefon zur Abspeicherung in einer Sprachspeichereinrichtung gesprochen hat, zugespielt wird.

Es wird davon ausgegangen, daß für das Ausführungsbeispiel ein solche Sprachspeichereinrichtung zur Inanspruchnahme von Sprachinformationsdiensten über eine entsprechende Anschlußeinheit an das Kommunikationssystem angeschlossen ist.

Dies ist durch die Einheit SSE angedeutet. Im Rahmen einer solchen Sprachspeichereinrichtung SSE, die allgemein als "Voice Mail" bezeichnet wird, ist es möglich bei Verbindungsversuchen zu einem besetzten oder einem freien, aber nicht bedienten Teilnehmerendgerät eine akustische Nachricht für den jeweils zugehörigen Teilnehmer in einem seinen Teilnehmerendgerät zugewiesenen Speicherbereich zu hinterlegen. Es dient also zum Empfangen, Speichern, Verteilen, Abrufen und Senden von gesprochenen Mitteilungen. Im Zusammenhang mit der Eingabe eines Termins soll nun in einer Teileinheit einer solchen Sprachspeichereinrichtung SSE durch einen Teilnehmer jeweils eine terminbezogene gesprochene Information eingespeichert werden. Hierzu wird beispielsweise nach Abheben des Handapparates durch den Teilnehmer eine den Einstieg in die Terminprogrammprozedur ermöglichende Kennzahl bzw. Kennzahlenkombination eingewählt. Nach der anschließend erfolgenden Eingabe der Uhrzeit und ggf. des Datums wird der Termin an die softwaremäßig gelöste Termineinrichtung übergeben. Zur Realisierung von spezifischen Steuerprozeduren beinhaltet die Steuerung einzelne Programmteilsteuerungen, die auf die in den entsprechenden Modulen des Programmspeichers PS enthaltenen Steuerabläufe zugreifen. In dem erfindungsgemäßen Fall der Realisierung der spezifischen Terminfunktion sollen diese Steuerabläufe durch das angedeutete Modul TER geliefert werden. Durch die "Termineinrichtung" wird die eingegebene Uhrzeit und ggf. das Datum in dem Kundendatenspeicher KD des Systems abgelegt. Dies ist durch den Eintrag TR1 symbolisiert. Zusätzlich zu jedem Termin wird individuell hierfür eine Adresse innerhalb der genannten Teileinheit der Sprachspeichereinrichtung SSE durch das System automatisch generiert und ebenfalls in Zuordnung zu dem eingespeicherten Termin im Kundendatenspeicher abgespeichert. Dies ist durch den Eintrag Ad1-SSE angedeutet. Diese Adresseninformation Ad1-SSE definiert ein bestimmtes Sprach-Postfach der Teileinheit TE innerhalb der Sprachspeichereinrichtung über die der Termin einer bestimmten noch aufzusprechenden Textinformation zugeordnet wird. Eine Identifikationsinformation des den Termin programmierenden Teilnehmers FE1, d. h. also letztendlich seine Rufnummer wird ebenfalls in Zuordnung zu dem eingegebenen Termin TR und der jeweils generierten Adresse Ad1 bis Adx abgespeichert. Dies ist durch einen Eintrag N-FE1 symbolisiert. Anschließend an die Eingabe des Termins wird durch die Software-Komponente Benutzungsoberfläche BOF, die über die peripherienahe Komponente DH Tastenbetätigungen von der Peripherie empfängt, unter Einbeziehung der vermittlungstechnischen Komponente VT, die Sprachspeichereinrichtung SSE automatisch angerufen. Die zuständige Programmkomponente DH-SSE erzeugt aus den empfangenen Anreizen logische Tastendrücke, die als in einem vorgegebenen Protokoll verschlüsselte Meldungen an die Softwarekomponente BOF-FE1 übergeben und entsprechend verarbeitet werden. Meldet sich die durch die Einbeziehung der Komponente DH-SSE gerufene Sprachspeichereinrichtung SSE, so wird sie durch die Systemsteuerung -unter der Voraussetzung einer ISDN-orientierten Schnittstelle über einen Signalisierungskanal- über die Komponente DH-SSE automatisch in einen Zustand versetzt, in dem vom Endgerät aus ein Text aufgesprochen werden kann. Grundsätzlich ist es auch möglich, die Schnittstelle zum Sprachspeichersystem als normale Leitungsschnittstelle, d. h. als a/b-Schnittstelle auszubilden, die auf der Grundlage von Mehrfrequenz-Code-Zeichen Daten austauscht und Befehle absetzt. Der aufgesprochene Text wird in der Teileinheit TE der Sprachspeichereinrichtung SSE unter der, z. B. über den Signalisierungskanal übergebenen Adresse Ad1 abgelegt. Mit dem Auflegen des Handapparates oder ggf. mit dem Ausschalten einer am betreffenden Endgerät -im Beispiel das Endgerät FE1- vorhandenen Freisprecheinrichtung, ist die Programmierprozedur für den Termin abgeschlossen. Für jeden Termin, auch für Termine ein und desselben Teilnehmers wird jeweils eine individuelle Adresse durch die Systemsteuerung generiert unter der dann die gesprochene Textinformation in der Teileinheit TE des Sprachspeichersystems jeweils abgelegt wird.

Die "Termineinrichtung" überwacht die im Kundendatenspeicher KD insgesamt abgelegten Termine in einem festen Zeitraster. Dies kann beispielsweise ein Minuten-Zeitraster sein. Im Kommunikationssystem sind nämlich grundsätzlich Möglichkeiten für eine derartige Zeitmessung vorhanden. Diese Zeitverwaltung im System kann beispielsweise durch die implementierte Zählung der von einem Taktgeber TG gelieferten Taktimpulse realisiert werden. Dieser Taktgeber steuert z. B. auch die Realzeituhr, die beispielsweise über ein Display DL die aktuelle Zeit anzeigt.

Bei Fälligwerden eines Termins, beispielsweise des durch den Teilnehmer FE1 eingegebenen Termins TR, wird über die Komponente BOF-FE1 die Sprachspeichereinrichtung SSE reserviert. Falls die Speichereinrichtung nicht schon andere Aufträge bedient, erfolgt ein Anruf zu dem betreffenden Teilnehmer, im Beispiel für dem Teilnehmer dem das Endgerät FE1 zugeordnet ist. Danach wird die Sprachspeichereinrichtung gerufen und nach Melden im Sinne des Leistungsmerkmals "Übergeben nach Melden", das in der Regel im System bereits implementiert ist, mit dem Teilnehmer verbunden. Über den Signalisierungskanal wird dann diese Sprachspeichereinrichtung automatisch veranlaßt, die unter der entsprechenden Adresse, im Beispiel der Adresse Ad1 vorab abgelegte Textinformation als eine entsprechende Ansage für den Teilnehmer auszugeben. Grundsätzlich stellt sie dabei sowohl beim Aufnehmen als auch bei der Wiedergabe der gesprochenen Textinformation eine Verbindung der Sprachkanäle des jeweiligen Fernsprechendgerätes und der Sprachspeichereinrichtung her. Es ist grundsätzlich auch möglich, daß die "Termineinrichtung" in der Sprachspeichereinrichtung SSE selbst angeordnet ist. Es werden also die abgespeicherten Termin lokal von dieser Einrichtung überwacht. Um dies zu ermöglichen werden die Termineingaben über den Signalisierungskanal auf dem Weg über die Komponente BOF-FE1 und die peripherie-nahe Komponente DH-SSE an die Sprachspeichereinrichtung SSE weitergegeben.

Grundsätzlich empfängt die Benutzungsoberfläche BOF-FE eines jeden Endgerätes über die Komponente DH-FE Tastenanreize und interpretiert diese im Rahmen der Prozedurführung.

Es besteht auch die Möglichkeit, die im Zusammenhang mit der sprachunterstützen Terminfunktion notwendigen Abspeicherungen, im wesentlichen den vom Teilnehmer eingesprochenen Text, im Systemspeicher des Kommunikationssystems vorzunehmen. Eine weitere Möglichkeit besteht darin, für diese Abspeicherung einen im jeweiligen Endgerät angeordneten Sprachspeicher zu nutzen. In einem solchen Fall müßte die für die Durchführung dieser Terminfunktion und für die Sprachspeicherung notwendige "Intelligenz" im Endgerät implementiert sein.

Grundsätzlich ist es auch möglich die Ansage bei Fälligwerden eines Termins über einen automatisch eingeschalteten Lautsprecher vorzunehmen. Dies kann der am Endgerät vorhandene Lautsprecher sein, wobei dann die Aktivierung im Sinne eines Direktansprechens erfolgt. Es kann sich bei dem für diese Ansage des eingesprochenen Textes eingeschalteten Lautsprechers auch um einen separat angeordneten Lautsprecher, wie z. B. einem Einzellautsprecher einer endgeräteunabhängigen Lautsprechergruppe, handeln. Wird in einem solchen Fall der Erhalt dieser gesprochenen Nachricht nicht quittiert, so kann vorgesehen sein, daß eine Wiederholung der betreffenden Ansage vorgenommen wird.

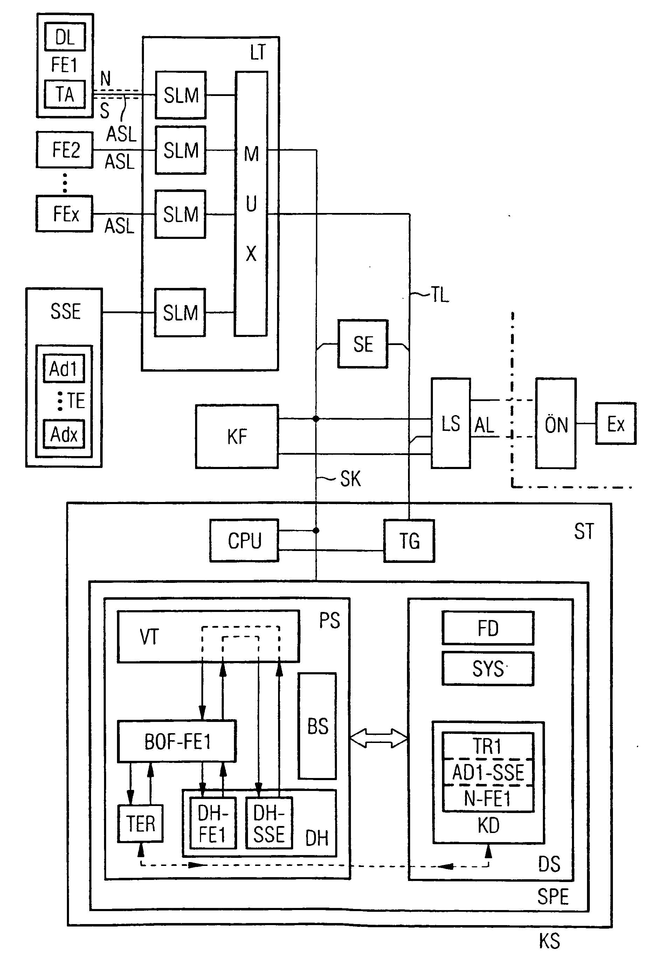

## Patentansprüche

1. Verfahren zur Signalisierung eines Termins (TR) an einem Endgerät (FE1, FEx),
wobei das Endgerät (FE1, FEx) an einem Kommunikationssystem (KS) angeschlossen ist, wobei das Kommunikationssystem (KS) einen Systemspeicher (SPE) zur Speicherung von Programmmodulen (VT, TER, DH) und von Daten aufweist,
wobei durch einen Teilnehmer über dessen Endgerät (FE1, FEx) eine Termininformation (TR1), die ein bestimmtes Datum und/oder eine bestimmte Uhrzeit repräsentiert, eingegeben wird, und
wobei bei Erreichen des damit gesetzten Termins (TR) für den Teilnehmer an dessen Endgerät (FE1, FEx) eine entsprechende Anzeige ausgegeben wird,
**dadurch gekennzeichnet, dass**
- in einem ersten Schritt der Teilnehmer über sein Endgerät (FE1, FEx) die Termininformation (TR1) an das Kommunikationssystem (KS) übermittelt,
- in einem zweiten Schritt eine Adressinformation (Ad1-SSE) für einen im Sinne eines SprachPostfaches definierten Abschnitt (Ad1...AdX) einer für die Entgegennahme, die Aufzeichnung und das Wiedergeben von Anrufen zur Verfügung stehenden Sprachspeichereinrichtung (SSE) ermittelt und in Verknüpfung mit der Termininformation (TR1) und einem Identitätskennzeichen (N-FE1) des Endgerätes (FE1, FEx) in dem Kommunikationssystem (KS) abgespeichert wird,
- in einem dritten Schritt das Endgerät (FE1, FEx) des Teilnehmers mit der Sprachspeichereinrichtung (SSE) verbunden wird, so dass durch den Teilnehmer eine mit der Adressinformation (Ad1-SSE) verknüpfte und der Termininformation (TR1) zugeordnete Textinformation eingesprochen und in dem Sprachpostfach gespeichert wird,
- in einem vierten Schritt mit Erreichen des gesetzten Termins (TR) durch das Kommunikationssystem (KS) eine Verbindung zwischen dem der Termininformation (TR1) zugeordneten Endgerät (FE1, FEx) und der Sprachspeichereinrichtung (SSE) hergestellt wird, wobei durch das Kommunikationssystem (KS) die Wiedergabe der eingesprochenen und mit der Adressinformation (Ad1-SSE) verknüpften Textinformation ausgelöst wird.

2. Verfahren nach Patentanspruch 1,
**dadurch gekennzeichnet,**
**dass** die im Zusammenhang mit der Realisierung der Terminfunktion notwendigen Informationen (TR1, Ad1-SSE, N-FE1) im Systemspeicher (SPE) selbst gespeichert werden und dass die erforderlichen Steuerabläufe durch die in einem diesbezüglich vorhandenen Steuermodul (TER) gespeicherten Informationen aufrufbar sind.

3. Verfahren nach einem der vorhergehenden Patentansprüche,
**dadurch gekennzeichnet,**
**dass** die Ausgabe der gesprochenen Textinformation in Abhängigkeit von einer aufgrund einer entsprechenden optischen oder akustischen Anzeige am Endgerät (FE1, FEx) vorgenommenen Handhabung des Teilnehmers erfolgt, mit der die Aktivierung eines Sprachausgabeorgans am Endgerät (FE1, FEx) vorgenommen wird.

4. Verfahren nach Patentanspruch 1 oder 2,
**dadurch gekennzeichnet,**
**dass** mit Erreichen des gesetzten Termins (TR) automatisch der Lautsprecher des Endgerätes (FE1, FEx) im Sinne eines Direktansprechens und/oder die Lautsprecher einer programmierten Durchsagegruppe aktiviert werden und daraufhin die Ausgabe der gesprochenen Textinformation vorgenommen wird.

5. Verfahren nach einem der vorhergehenden Patentansprüche,
**dadurch gekennzeichnet,**
**dass** bei Ausbleiben einer die Ausgabe der gesprochenen Textinformation bestätigenden Eingabe eine durch einen eingegebenen betriebstechnischen Auftrag geregelte Wiederholung dieser Ausgabe vorgenommen wird.

6. Verfahren nach einem der vorhergehenden Patentansprüche,
**dadurch gekennzeichnet,**
**dass** in den Fällen, in denen der Termin (TR) während einer bestehenden Gesprächsverbindung erreicht wird, die Ausgabe der mit der Adressinformation (Ad1-SSE) verknüpften und der Termininformation (TR1) zugeordneten Textinformation nach Beendigung dieser Gesprächsverbindung erfolgt.

7. Verfahren nach einem der Patentansprüche 1 bis 5,
**dadurch gekennzeichnet,**
**dass** in den Fällen, in denen ein Termin (TR) während einer bestehenden Gesprächsverbindung erreicht wird, dieser Termin (TR) im Sinne eines so genannten Zweitanrufes für den Teilnehmer signalisiert wird und bei der Annahme dieses Anrufes automatisch die Ausgabe der gesprochenen Textinformation vorgenommen wird.

8. Kommunikationssystem zur Durchführung eines der vorstehenden Verfahren,
mit einer Vermittlungseinrichtung (KF) zur Verbindung von Endgeräten (FE1, FEx),
mit einem Systemspeicher (SPE) zur Speicherung von Programmmodulen (VT, TER, DH) und von Daten, und
mit einem Systemprozessor (CPU) mit einem Betriebssystem zur Abarbeitung der Programmmodule (VT, TER, DH),
**dadurch gekennzeichnet,**
**dass** der Systemspeicher (SPE) zur Speicherung einer mittels eines Endgerätes (FE1, FEx) eingegebenen Termininformation (TR1) eingerichtet ist,
**dass** das Kommunikationssystem (KS) mit einem Programmmodul (TER) ausgerüstet ist, welches zum Zugriff auf eine Sprachspeichereinrichtung (SSE) eingerichtet ist,
**dass** das Programmmodul (TER) zur Ermittlung und Speicherung der Adressinformation (Ad1-SSE) eines als Sprach-Postfach definierten Speicherbereiches (Ad1...Adx) der Sprachspeichereinrichtung (SSE) ausgestaltet ist,
**dass** in dem Sprach-Postfach eine der Termininformation (TR1) zuzuordnende Sprachnachricht speicherbar ist,
**dass** das Programmmodul (TER) derart eingerichtet ist, dass bei Erreichen des durch die Termininformation (TR1) definierten Termins (TR) der Aufbau einer Kommunikationsverbindung zwischen dem Endgerät (FE1, FEx), welches dem Termin (TR) zugeordnet ist, und der Sprachspeichereinrichtung (SSE) erfolgt, wobei eine Ausgabe der in dem Sprach-Postfach gespeicherten und dem Termin (TR) zugeordneten Sprachnachricht als Signalisierung des Termins TR) erfolgt.

9. Kommunikationssystem nach Anspruch 8,
**dadurch gekennzeichnet,**
**dass** die Sprachspeichereinrichtung (SSE) als eine im Systemspeicher (SPE) integrierte Teileinheit ausgebildet ist.

10. Kommunikationssystem nach Patentanspruch 8,
**dadurch gekennzeichnet,**
**dass** die Sprachspeichereinrichtung (SSE) als Teileinheit (TE) eines über eine entsprechende, vom System (KS) unterstützte Schnittstelle angeschlossenen Sprachspeichersystems ausgebildet ist.

11. Kommunikationssystem nach Patentanspruch 8,
**dadurch gekennzeichnet,**
**dass** die Sprachspeichereinrichtung (SSE) als Teileinheit (TE) eines daran über die entsprechende Schnittstelle angeschlossenen und es unterstützenden Sprachspeichersystems ausgebildet ist und dass in der Sprachspeichereinrichtung (SSE) sowohl zumindest ein Teil der im Zusammenhang mit der Terminfunktion notwendigen Informationen gespeichert als auch die erforderlichen Steuerabläufe durch den entsprechenden Zugriff auf diesbezüglich darin vorgesehenen Programmmodule initiiert sind.

12. Kommunikationssystem nach Patentanspruch 8,
**dadurch gekennzeichnet,**
**dass** sämtliche im Zusammenhang mit der Realisierung der Terminfunktion notwendigen Abspeicherungen und die für die Abwicklung der erforderlichen Steuerabläufe notwendigen Programmmodule (VT, TER, DH), auf die eine Steuerung (ST) zugreift, einschließlich der Sprachspeichereinrichtung (SSE) im angeschlossenen Endgerät (FE1, FEx) selbst als Teil einer eine so genannte Anrufbeantworterfunktion ermöglichenden Ausstattung verwirklicht sind.

13. Kommunikationssystem nach einem der Patentansprüche 8 bis 12,
**dadurch gekennzeichnet,**
**dass** es derart ausgeführt ist, dass die Ausgabe der gesprochenen Textinformation in Abhängigkeit von einer aufgrund einer entsprechenden optischen oder akustischen Anzeige am Endgerät (FE1, FEx) vorgenommenen Handhabung des Teilnehmers erfolgen kann, mit der die Aktivierung eines Sprachausgabeorgans am Endgerät (FE1, FEx) vornehmbar ist.

## Claims

1. Method for signalling an appointment (TR) on a terminal (FE1, FEx), wherein the terminal (FE1, FEx) is connected to a communication system (KS), wherein the communication system (KS) has a system memory (SPE) for saving program modules (VT, TER, DH) and data, wherein appointment information (TR1) which represents a certain date and / or a certain time is entered by a subscriber by means of his terminal (FE1, FEx), and wherein upon reaching the appointment (TR) thus made, a corresponding display is output for the subscriber on his terminal (FE1, FEx), **characterised in that**
- in an initial step, the subscriber transfers the appointment information (TRI) to the communication system (KS) by means of his terminal (FEI, FEx),
- in a second step, address information (Ad1-SSE) for a section (AdI..AdX) defined in accordance with a voice mail box of a speech memory device (SSE) available for the receipt, recording and reproduction of calls is identified and saved in the communication system (KS) linked to the appointment information (TR1) and an identity character (N-FE1) of the terminal (FE1, FEx),
- in a third step, the terminal (FE1, FEx) of the subscriber is connected to the speech memory device (SSE) so that text information linked to the address information (Ad1-SSE) and allocated to the appointment information (TR1) is spoken in by the subscriber and is saved in the voice mail box,
- in a fourth step, upon reaching the appointment (TR), a connection is made by the communication system (KS) between the terminal (FE1, FEx) allocated to the appointment information (TR1) and the speech memory system (SSE), wherein by means of the communication system (KS) the reproduction of the text information spoken in and linked to the address information (AdI-SSE) is triggered.

2. Method according to claim 1 **characterised in that** the information (TR1, AdI-SSE, N-FE1) required in connection with the implementation of the appointment function is saved in the system memory (SPE) itself and that the necessary control processes can be activated by the information saved in a control module (TER) found for this purpose in this connection.

3. Method according to any one of the previous claims **characterised in that** the output of the spoken text information occurs depending on a manipulation by the subscriber on the basis of a corresponding optical or acoustic display on the terminal (FE1, FEx), and by means of said manipulation the activation of a speech output organ on the terminal is carried out.

4. Method according to claim 1 or 2 **characterised in that** upon reaching the appointment (TR), the loudspeaker of the terminal (FE1, FEx) is automatically activated for the purpose of a direct address and / or the loudspeakers of a programmed announcement group are automatically activated, upon which the output of the spoken text information is carried out.

5. Method according to any one of the previous claims **characterised in that**, in the absence of an input confirming the output of the spoken text information, a repetition of this output is made, controlled by an input operating-technology instruction.

6. Method according to any one of the previous claims **characterised in that** in cases in which the appointment (TR) is reached during an existing voice connection, the output of the text information linked to the address information (AdI-SSE) and allocated to the appointment information (TR1) occurs after the end of this voice connection.

7. Method according to any one of claims 1 to 5 **characterised in that** in cases in which an appointment (TR) is reached during an existing voice connection, this appointment (TR) is signalled for the subscriber as a so-called second call and upon acceptance of this call, the output of the spoken text information is automatically carried out.

8. Communication system to carry out one of the foregoing methods, with a communication installation (KF) for the connection of terminals (FE1, FEx), with a system memory (SPE) for saving program modules (VT, TER, DH) and data, and with a system processor (CPU) with an operating system for processing program modules (VT, TER, DH) **characterised in that** the system memory (SPE) is set up to save appointment information (TR1) input by means of a terminal (FE1, FEx), that the communication system (KS) is equipped with a program module (TER) which is set up to access a speech memory device (SSE), that the program module (TER) is designed to identify and save the address information (Ad1-SSE) of a memory area (Ad1-Adx), defined as a voice mail box, of the speech memory device (SSE), that a speech message to be allocated to the appointment information (TR1) can be saved in the voice mail box, that the program module (TER) is set up such that upon reaching the appointment defined by the appointment information (TR1), the establishment of a communication connection between the terminal (FE1, FEx)which is allocated to the appointment (TR) and the speech memory device (SSE) occurs, wherein an output of the voice message saved in the voice mail box and allocated to the appointment (TR) is carried out as a signalling of the appointment (TR).

9. Communication system according to claim 8 **characterised in that** the speech memory device (SSE) is designed as a partial unit integrated in the system memory (SPE).

10. Communication system according to claim 8 **characterised in that** the speech memory device (SSE) is designed as a partial unit (TE) of a speech memory system connected by means of a corresponding interface supported by the system (KS).

11. Communication system according to claim 8 **characterised in that** the speech memory device (SSE) is designed as a partial unit (TE) of a speech memory system connected to it by means of the corresponding interface and supporting it, and that in the speech memory device (SSE) both at least one part of the information required in connection with the appointment function is saved and also the necessary control processes are initiated by the corresponding access to program modules provided therein for this purpose.

12. Communication system according to claim 8 **characterised in that** all save operations required in connection with the implementation of the appointment function and the program modules (VT, TER, DH) required to deal with the necessary control processes, which a control (ST) accesses, including the speech memory device (SSE) are carried out in the connected terminal (FE1, FEx) itself as part of equipment enabling a so-called answerphone function.

13. Communication system according to any one of claims 8 to 12 **characterised in that** it is embodied such that the output of the spoken text information can occur depending on a manipulation by the subscriber on the basis of a corresponding optical or acoustic display on the terminal (FE1, FEx), and by means of said manipulation the activation of a speech output organ on the terminal (FE1, FEx) can be carried out.

## Revendications

1. Procédé servant à signaler un rendez-vous (TR) à un terminal (FE1, FEx),
sachant que le terminal (FE1, FEx) est connecté à un système de communication (KS), que le système de communication (KS) présente une mémoire système (SPE) servant à mémoriser des modules de programme (VT, TER, DH) et des données,
sachant qu'une information relative à un rendez-vous (TR1), laquelle représente une certaine date et/ou une certaine heure, est saisie par un abonné par l'intermédiaire du terminal (FE1, FEx) de ce dernier, et sachant qu'un message correspondant est délivré à l'attention de l'abonné sur son terminal (FE1, FEx) lorsque le rendez-vous ainsi fixé (TR) est atteint,
**caractérisé en ce que**
- lors d'une première étape, l'abonné transmet par l'intermédiaire de son terminal (FE1, FEx) l'information relative au rendez-vous (TR1) au système de communication (KS),
- lors d'une deuxième étape, une information relative à l'adresse (Ad1-SSE) est déterminée pour une section (AD1... Adx), définie au sens d'une boîte vocale, d'un système de mémorisation vocale (SSE) se tenant à disposition pour la réception, l'enregistrement et la restitution d'appels et est mémorisée dans le système de communication (KS) en lien avec l'information relative au rendez-vous (TR1) et avec un identificateur (N-FE1) du terminal (FE1, FEx),
- lors d'une troisième étape, le terminal (FE1, FEx) de l'abonné est relié au système de mémorisation vocale (SSE) de sorte qu'une information de texte liée à l'information relative à l'adresse (Ad1-SSE) et associée à l'information relative au rendez-vous (TR1) est prononcée par l'abonné et est mémorisée dans la boîte vocale,
- lors d'une quatrième étape, lorsque le rendez-vous (TR) fixé est atteint, une liaison est établie par le système de communication (KS) entre le terminal (FE1, FEx) associé à l'information relative au rendez-vous (TR1) et le système de mémorisation vocale (SSE), sachant que la restitution de l'information de texte prononcée et liée à l'information relative à l'adresse (Ad1-SSE) est déclenchée par le système de communication (KS).

2. Procédé selon la revendication 1,
**caractérisé en ce**
**que** les informations (TR1, Ad1-SSE, N-FE1) nécessaires en rapport avec la réalisation de la fonction de rendez-vous sont mémorisées dans la mémoire système (SPE) elle-même, et en ce que les séquences de commande requises peuvent être appelées grâce aux informations mémorisées dans un module de commande (TER) présent à cet effet.

3. Procédé selon l'une quelconque des revendications précédentes,
**caractérisé en ce**
**que** l'émission de l'information de texte vocale est effectuée en fonction d'une manipulation effectuée par l'abonné du fait d'un message correspondant optique ou acoustique s'affichant sur le terminal (FE1, FEx), laquelle manipulation permet d'activer un organe d'émission vocale sur le terminal (FE1, FEx).

4. Procédé selon la revendication 1 ou 2,
**caractérisé en ce**
**que** lorsque le rendez-vous (TR) fixé est atteint, le haut-parleur du terminal (FE1, FEx) au sens d'un adressage direct et/ou les haut-parleurs d'un groupe d'informations programmé sont activés automatiquement, et en ce que s'ensuit l'émission de l'information de texte vocale.

5. Procédé selon l'une quelconque des revendications précédentes,
**caractérisé en ce**
**que** lorsqu'une entrée confirmant que l'information de texte vocale a été émise fait défaut, ladite émission est répétée de manière réglée par un ordre d'opération saisi.

6. Procédé selon l'une quelconque des revendications précédentes,
**caractérisé en ce**
**que** dans les cas où le rendez-vous (TR) est atteint pendant une communication en cours, l'émission de l'information de texte liée à l'information relative à l'adresse (Ad1-SSE) et associée à l'information relative au rendez-vous (TR1) est effectuée une fois ladite conversation finie.

7. Procédé selon l'une quelconque des revendications 1 à 5,
**caractérisé en ce**
**que** dans les cas où un rendez-vous (TR) est atteint pendant une conversation en cours, ledit rendez-vous (TR) est signalé au sens d'un double appel à l'attention de l'abonné, et en ce que lorsque ledit appel est pris, l'émission de l'information de texte vocale est effectuée automatiquement.

8. Système de communication servant à la mise en oeuvre d'un des procédés énoncés ci-avant,
comprenant un système de commutation (KF) destiné à être relié aux terminaux (FE1, FEx),
comprenant une mémoire système (SPE) servant à mémoriser des modules de programme (VT, TER, DH) et des données, et comprenant un processeur de système (CPU) doté d'un système de fonctionnement servant à exécuter des modules de programme (VT, TER, DH),
**caractérisé en ce**
**que** la mémoire système (SPE) est mise au point pour mémoriser une information relative à un rendez-vous (TR1) saisie au moyen d'un terminal (FE1, FEx),
**que** le système de communication (KS) est équipé d'un module de programme (TER) mis au point pour accéder à un système de mémorisation vocale (SSE),
**que** le module de programme (TER) est configuré pour déterminer et mémoriser l'information relative à l'adresse (Ad1-SSE) d'une zone de mémoire (AD1... Adx), définie comme une boîte vocale, du système de mémorisation vocale (SSE),
**qu'**un message vocal devant être associé à l'information relative au rendez-vous (TR1) peut être mémorisé dans la boîte vocale,
**que** le module de programme (TER) est mis au point de telle manière que lorsque le rendez-vous (TR) défini par l'information relative au rendez-vous (TR1) est atteint, l'établissement d'une liaison de communication est effectué entre le terminal (FE1, FEx), associé au rendez-vous (TR), et le système de mémorisation vocale (SSE), sachant que le message vocal associé au rendez-vous (TR) et mémorisé dans la boîte vocale est émis en tant que signalisation du rendez-vous (TR).

9. Système de communication selon la revendication 8,
**caractérisé en ce**
**que** le système de mémorisation vocale (SSE) se présente sous la forme d'une unité partielle intégrée à la mémoire système (SPE).

10. Système de communication selon la revendication 8,
**caractérisé en ce**
**que** le système de mémorisation vocale (SSE) se présente sous la forme d'une unité partielle (TE) d'un système de mémorisation vocale connecté par l'intermédiaire d'une interface correspondante assistée par le système (KS).

11. Système de communication selon la revendication 8,
**caractérisé en ce**
**que** le système de mémorisation vocale (SSE) se présente sous la forme d'une unité partielle (TE) d'un système de mémorisation vocale connecté audit système par l'intermédiaire de l'interface correspondante et l'assistant, et en ce qu'au moins une partie des informations nécessaires en rapport avec la fonction de rendez-vous sont mémorisées dans le système de mémorisation vocale (SSE) tout comme les séquences de commande requises sont lancées dans le système de mémorisation vocale (SSE) grâce à l'accès correspondant aux modules de programme prévus à cet effet.

12. Système de communication selon la revendication 8,
**caractérisé en ce**
**que** toutes les mémorisations nécessaires en rapport avec la réalisation de la fonction de rendez-vous et les modules de programme (VT, TER, DH) nécessaires au déroulement des séquences de commande requises, auxquels une commande (ST) accède, y compris le système de mémorisation vocale (SSE) sont réalisés dans le terminal (FE1, FEx) connecté comme une partie d'un équipement rendant possible une fonction de répondeur téléphonique.

13. Système de communication selon l'une quelconque des revendications 8 à 12,
**caractérisé en ce**
**que** ledit système de communication est réalisé de telle manière que l'émission de l'information de texte vocale peut être effectuée en fonction d'une manipulation effectuée par l'abonné du fait d'un message correspondant optique ou acoustique s'affichant sur le terminal (FE1, FEx), laquelle manipulation permet d'activer un organe d'émission vocale sur le terminal (FE1, FEx).
